Europäisches Patentamt

European Patent Office

Office européen des brevets

(19)

(11) Publication number: **0 150 434**
**A1**

# EUROPEAN PATENT APPLICATION

(21) Application number: 84115700.1

(22) Date of filing: 18.12.84

(51) Int. Cl.⁴: **G 01 M 11/00**

(30) Priority: 29.12.83 JP 246644/83

(43) Date of publication of application: 07.08.85
Bulletin 85/32

(84) Designated Contracting States: **CH DE FR GB LI**

(71) Applicant: **SUMITOMO ELECTRIC INDUSTRIES LIMITED, No. 15, Kitahama 5-chome Higashi-ku, Osaka-shi Osaka-fu (JP)**
Applicant: **Nippon Telegraph and Telephone Public Corporation, 1-6 Uchisaiwai-cho 1-chome Chiyoda-ku, Tokyo 100 (JP)**

(72) Inventor: **Toda, Yuichi c/o Yokohama W. Sumitomo E. Ind. Ltd., No.1, Taya-cho, Totsuka-ku, Yokohama-shi, Kanagawa (JP)**
Inventor: **Suzuki, Shuzo c/o Yokohama W. Sumitomo E. Ind.Ltd., No.1, Taya-cho, Totsuka-ku, Yokohama-shi, Kanagawa (JP)**
Inventor: **Sakamoto, Katsuji c/o Yokohama W Sumitomo E Ind L., No.1, Taya-cho, Totsuka-ku, Yokohama-shi, Kanagawa (JP)**
Inventor: **Ota, Akio c/o Yokohama W. Sumitomo E. Ind. Ltd., No.1, Taya-cho, Totsuka-ku, Yokohama-shi, Kanagawa (JP)**
Inventor: **Toduka, Masamitsu, No. 2023-36, Hori-machi, Mito-shi, Ibaraki (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) Method for measuring optical fiber characteristics.

(57) A method for measuring characteristics of optical fibers including transmission loss, transmission bandwidth and cutoff frequency without having to cut the fiber to be measured. A first optical fiber (2') guides light from a source (1) to one end (6) of a second optical fiber (7), the transmission characteristics of which are to be measured. A third optical fiber (11) couples light emerging from the other end (8) of the second optical fiber (7) to a detector (9). Structural parameters of the first optical fiber (2) are selected such that losses due to coupling (5) between the first and second optical fibers are negligibly small except for a Fresnel loss due to an air layer present between the coupled ends (4', 6) of the first and second fibers. Similarly, structural parameters of the third optical fiber (11) are selected such that losses due to coupling between the second and third optical fibers are made negligibly small. The output of the light source (1) is controlled to emit a constant intensity.

## METHOD FOR MEASURING OPTICAL FIBER CHARACTERISTICS

### BACKGROUND OF THE INVENTION

The present invention relates to a method for measuring the transmission loss, transmission bandwith, cutoff frequency and other characteristics of an optical fiber, which measurements depend on the relationship between the intensity of light injected into one end of the fiber and the intensity of light emerging from the other end of the fiber.

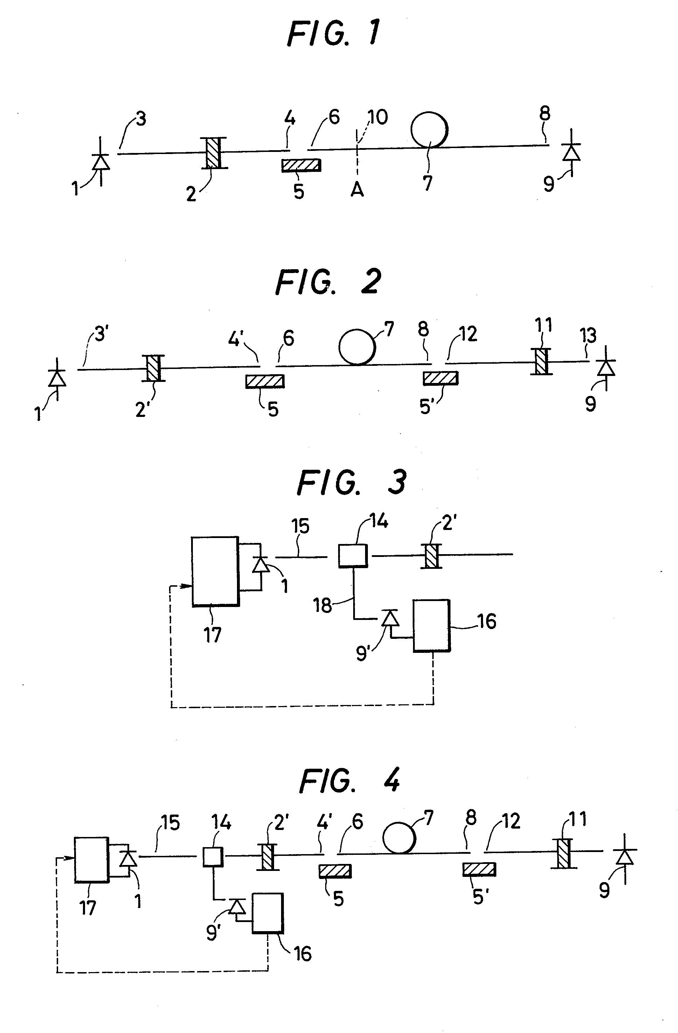

Fig. 1 illustrates schematically the principles of the conventional method for measuring optical fiber characteristics. The following description concerns the measurement of transmission loss, which is often the most important and typifying parameter of optical fibers. Specific methods for measuring other transmission characteristics of the fiber, such as the transmission bandwidth and cutoff frequency, will not be discussed since the principles involved are substantially the same.

In Fig. 1, reference numeral 1 represents a light source which is typically a laser diode (LD), light-emitting diode (LED) or mono-chrometer; 2, a dummy fiber used to establish the mode of light issuing from the light source and propagating through the fiber; 3, the end of the dummy fiber 2 closer to the light source; 4, the other end of the dummy fiber which is coupled to the fiber 7 whose transmission loss is to be measured; 5, a V-groove guide for coupling the dummy fiber to one end of the fiber 7; 6, the end of the fiber 7 which is closer to the light source and at which the fiber is coupled to the dummy fiber; 8, the other end of the fiber 7 from which light emerges; and 9, a light detector.

The transmission loss of the fiber 7 can be measured with the system shown above by the following procedure. First, the intensity of light emerging at the detector 9 is measured. It is assumed that the measured value of intensity is $P_1$ dBm. Then, the fiber 7 is cut at point A and the cut end 10 of the fiber is coupled to the detector 9 for measuring the intensity of light injected into the fiber 7. If the second measured value of light intensity is $P_2$ dBm, the transmission loss that has occurred as light propagates from point A to the emerging end 8 is $(P_2 - P_1)$ dBm.

This method of measurement provides a high accuracy but requires cutting the fiber 7 at point A and re-coupling the cut end 10 to the detector 9.

Accordingly, a primary object of the present invention is to provide a method capable of precisely

0150434

- 3 -

measuring the characteristics of an optical fiber by simply measuring $P_1$, that is, without having to cut the fiber.

## SUMMARY OF THE INVENTION

In accordance with the above and other objects, there is provided a method for measuring the characteristics of an optical fiber in a system comprising a first optical fiber which guides light from a source, a second optical fiber coupled at one end to said first optical fiber and the transmission characteristics of which are to be measured, and a third optical fiber coupled to the second optical fiber at its other end and which guides light emerging to a detector. Structural parameters of the first optical fiber are selected so that losses due to coupling between the first and second optical fibers are negligibly small except for a Fresnel loss due to an air layer present between coupled ends of said first and second fibers, while structural parameters of the third optical fiber are selected so that losses due to coupling between said second and third optical fibers are negligibly small. The light source is controlled to emit a constant light intensity. If desired, the third optical fiber can be omitted and an end of the second optical fiber directly coupled to the detector.

BRIEF DESCRIPTION OF THE DRAWINGS

Fig. 1 illustrates schematically a conventional method for measuring the characteristics of an optical fiber; and

Fig. 2 to 4 depict three embodiments of methods of the present invention.

DESCRIPTION OF THE PREFERRED EMBODIMENTS

Fig. 2 shows a first embodiment of the present invention. One end 6 of a fiber 7 whose transmission loss is to be measured is coupled to one end 4' of a dummy fiber 2' by a V-groove guide 5, while the other end 8 of the fiber 7 is coupled to one end 12 of a fiber 11 on the light-receiving side by a V-groove guide 5'. Coupling losses occur both at the junction between the ends 4' and 6 and at the junction between the ends 8 and 12. These losses include three types: a first due to geometrical misalignment such as axial misalignment between fiber ends, a second being the Fresnel reflection loss due to the air layer present between the two fibers, and the third being due to factors inherent in the fibers such differences in fiber diameters and refractive index differences between their cores and claddings (i.e., differences in the structural parameters of the fibers).

It is theoretically possible to determine the structural parameters of the fiber 2' in such a manner that the only losses occurring at the junction with the fiber 7 are due to the fiber geometry and the Fresnel reflection. For example, the loss due to the differences in core diameters between the fibers 2' and 7 can be eliminated if the core diameter of the fiber 2' is made smaller than the core diameter of the fiber 7. Therefore, by selecting a dummy fiber 2' having structural parameters within an appropriate margin with respect to the specified ranges of the structural parameters of the fiber 7, the coupling losses occurring between the two fibers can be limited to those due to geometrical misalignment and Fresnel reflection. Similarly, by properly determining the structural parameters of the fiber 7 with respect to those of the fiber 11 on the receiving side, the losses occurring at the junction between the two fibers can be limited to the above-mentioned two types of losses.

As a further step, the Fresnel reflection loss can be made negligibly small or entirely eliminated either by fusing the ends 4' and 6 as well as the ends 8 and 12, or by employing an index-matching agent at both junctions. By using a highly precise V-groove guide, the coupling loss due to geometrical misalignment can be made negligibly small or even zero.

0150434

- 6 -

Hence, by meeting the requirements set forth above, the coupling losses which may occur at the two junctions can be made negligibly small or even zero.

If the light source 1 emits light of a constant intensity, the light emerging at the end 4' of the fiber 2' also has a constant intensity. Therefore, if the coupling loss at the junction between the ends 4' and 6 is zero, light of constant intensity enters the end 6 irrespective of the type of the fiber 7. If the intensity of the light emerging the end at 4' is found to be $P_1'$ dBm by preliminary measurement, the transmission loss of the fiber 7 can be determined by simply measuring the intensity of the light received at the detector 9. If the latter intensity is $P_2$ dBm, the transmission loss in question is given by $P_1' - P_2'$. Therefore, as compared with the conventional method using the system of Fig. 1, the technique of the present invention involves half the work (there is no need for cutting the fiber 7 before the measurement of $P_2$), yet the invention achieves a high accuracy in measuring the transmission loss of the fiber 7.

The foregoing discussion concerns methods that can be used to either eliminate or make negligibly small the coupling loss that can otherwise occur due to geometrical misalignment, the presence of an air layer between the ends of two fibers, or the differences in the structural parameters of the two fibers. Theoretically, any coupling loss that might occur between the two fibers can be made negligibly small or even zero by these methods, but in actuality, total elimination of the coupling loss is difficult. Accordingly, the important consideration then is what is the degree of the coupling loss that can be regarded as negligibly small for practical purposes. However, this problem denies simple generalization. For example, a fiber 10 km long has a total loss of 30 dB if its loss per kilometer is 3 dB. With this fiber, a coupling loss of as small as 2 to 3 dB can be measured to a precision of 10%. On the hand, if the fiber to be measured is 1 to 2 km long and has a loss of 1 dB/km, the total loss is 1 to 2 dB and a coupling loss of 2 to 3 dB cannot be measured to any useful degree of precision because, in this case, the error is 10% or more. Therefore, in consideration of the reproducibility of measurements by the conventional method using the system of Fig. 1, the coupling loss that can be regarded as being negligibly small for practical purposes would be one that can be measured to a precision of 10% or less. A lower coupling loss may be required depending upon the characteristics of the fiber in question. Specific methods for achieving this are described below.

The fiber 11 in Fig. 2 may be omitted and the end 8 of the fiber 7 may be directly coupled to the detector 9. However, using the fiber 11 has the advantage of easy installation since the detector 9 can then be located at some reasonable distance from the fiber 7.

The foregoing description assumes uniformity in the fiber 2', but, if desired, it may be a conventional dummy fiber which is connected at a point near the end 4' to a fiber having structural parameters that satisfy the requirements set forth above for eliminating the coupling loss or making it negligibly small. In the embodiment shown, the ends of the fibers 2' and 7 or those of the fibers 7 and 11 can be fused together or joined by V-guides. If better axial alignment between two fibers is desired so that the coupling loss between the ends of the fibers is reduced sufficiently to permit higher precision measurement, the ends 4' and 6 may be mounted on a high-precision positioning mechanism for aligning their axes so as to maximize the intensity of light emerging at the detector 9. The same technique may be employed for achieving precise axial alignment between the ends 8 and 12. Axial alignment techniques for providing the emerging light with maximum intensity are known, and for the coupling of single-mode fibers, an automated process is also known.

Obviously, a prerequisite for the methods or techniques discussed above is that the light source emit light of a constant intensity. If a higher precision measurement is desired, the embodiments shown in Figs. 3 and 4 may be employed. In the system of Fig. 3, light issuing from a light source 1 enters an optical distributor 14 through a fiber 15. At the distributor 14, the light is divided into two portions, one being directly coupled to a dummy fiber 2' and the other being coupled to a detector 9' through a fiber 18. The light entering the dummy fiber 2' follows a path which is identical to that shown in Fig. 2. In the system shown in Fig. 3, a variation in the intensity of light issuing from the source 1 causes a change in the intensity of light received at the detector 9'. This variation is detected by an electric circuit 16 associated with the detector 9' and is negatively fed back to a light source driving circuit 17 along the path indicated by the dashed line. By this mechanism, the light source 1 is controlled to provide a constant intensity of light.

A method for correcting the output of the detector 9 is illustrated in Fig. 4. It is assumed that the intensity of light emerging at the detector 9' is $P_0$, the output at the end 4' of the fiber 2' is $P_1'$, and the intensity of outgoing light as received at the detector 9' is $P_2'$. In this case, the transmission loss of the fiber 7' is $P_1' - P_2'$. It is now assumed that the output of the detector 9' has changed to $P_0'$ as a result of a variation in the output of the light source. If $P_0 > P_0'$, the intensity of light at the end 4' is $P_1' - n(P_0 - P_0')$, where n is a constant determined by the characteristics of the optical distributor 14. If the output of the detector 9 in the case under consideration changes to $P_2''$, the transmission loss of the fiber 7 can be calculated as $P_2'' - P_1' - n(P_0 - P_0')$. In this formula, $P_1'$ is a known value and n is a constant that depends on the characteristics of the optical distributor. Therefore, if the intensity of light emitted by the light source changes, the transmission loss of the fiber 7 can be determined by adding to $P_2''$ a corrective term based on the measured value of $P_0 - P_0'$ without measuring the value of $P_1'$ every time such change in light intensity occurs.

As will be apparent from the foregoing description, the method of the present invention permits precise measurement of the transmission characteristics of an optical fiber with a simple system wherein the ends of the fiber are coupled to two other fibers by V-guides. Since the method requires no cutting of the fiber before measuring the intensity of light emerging at a detector, it involves half the work necessary in the conventional method and yet achieves a high precision in measurement, comparable to that attained by the conventional technique.

CLAIMS

1. In a method for measuring the characteristics of an optical fiber in a system comprising a first optical fiber which guides light from a source, a second optical fiber coupled at one end to said first optical fiber and the transmission characteristics of which are to be measured, and a third optical fiber coupled to said second optical fiber at its other end and which guides light emerging to a detector, the improvement comprising the steps of: selecting structural parameters of the first optical fiber so that losses due to coupling between said first and second optical fibers are negligibly small except for a Fresnel loss due to an air layer present between coupled ends of said first and second fibers, selecting structural parameters of said third optical fiber so that losses due to coupling between said second and third optical fibers are negligibly small, and controlling said light source to emit a constant light intensity.

2. The method according to claim 1, wherein said third optical fiber is omitted and an end of said second optical fiber is directly coupled to said detector.

3. The method according to claim 1, wherein junctions between at least one of said first and second optical fibers and said second and third optical fibers are established by fusion bonding.

4.    The method according to claim 1, wherein a refractive index-matching agent is interposed at junction portions between at least one of said first and second optical fibers and said second and third optical fibers.

5.    The method according to claim 1, further comprising the step of, before starting measurement, establishing axial alignment between at least one of said first and second optical fibers and second and third optical fibers so as to maximize an intensity of light emerging from said third optical fiber.

6.    The method according to claim 1, further comprising the steps of disposing an optical distributor in series with said first optical fiber to measure an intensity of light emerging from said source, and controlling an emission intensity of said light source to provide a constant light intensity.

7.    The method according to claim 1, further comprising the steps of disposing an optical distributor in series with said first optical fiber to measure an intensity of light emerging from said source, and correcting an intensity of light emerging from said third optical fiber on the basis of a detected variation in said intensity of light emerging from said source.

0150434

1/1

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ELECTRONICS LETTERS, vol. 18, no. 3, 1982, Paris, France; Y. NAMIHIRA et al. "High-stability measuring equipment for very small variations of optical-fibre loss", pages 124-126 <br> * Figure 1, page 126 * <br> --- | 1,3 | G 01 M 11/00 |
| X | L'ONDE ELECTRIQUE, vol. 61, no. 8/9, 1981, Paris, France; M. BOUILLIE "Les techniques de mesures sur fibres optiques : orientations des normalisations internationales", pages 54-61 <br> * Chapter 2 * <br> --- | 1,2 | |
| X | W.F. FREYHARDT "Betriebsmessverfahren für Lichtwellenleiter und optische Kabelstrecken", NTG Fachberichte, vol. 75 1980, VDE-VERLAG, Berlin pages 53-61 <br> * Page 54 * <br> --- | 1 | **TECHNICAL FIELDS SEARCHED (Int. Cl.4)** <br><br> G 01 M 11/00 |
| A | R. NOVAK "Präzise feldtaugliche Methode und Apparatur für die Dämpfungsmessungen an Glasfaser-Anlagen", NTG Fachberichte, vol. 75 1980, VDE-VERLAG, Berlin pages 108-115 <br> ---     -/- | 4 | |

The present search report has been drawn up for all claims

| Place of search | Date of completion of the search | Examiner |
|---|---|---|
| BERLIN | 26-03-1985 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503, 03.82

European Patent Office

**EUROPEAN SEARCH REPORT**

0150434

Application number

EP 84 11 5700

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 135 285  (PHILIPS KOMMUNIKATIONSINDUSTRIE AG) <br> * Claims 15, 16 * | 6,7 | |
| | --- | | |
| A | DE-B-2 835 491  (STANDARD ELEKTRIK LORENZ AG) <br> * Claim 7 * | 7 | |
| | ----- | | |

TECHNICAL FIELDS SEARCHED (Int. Cl.4)

The present search report has been drawn up for all claims

| Place of search | Date of completion of the search | Examiner |
|---|---|---|
| BERLIN | 26-03-1985 | FUCHS R |